# EUROPEAN PATENT APPLICATION

(11) **EP 2 199 324 A2**
(43) Date of publication of application: **23.06.2010**
(21) Application number: 09175766.6
(22) Date of filing: 12.11.2009
(51) Int. Cl.: C08J 9/00, B29C 44/12, B32B 27/08, B60R 13/02

(54) **Interior panel component for use with a vehicle and method for making**

(30) Priority: 17.12.2008 US 336916
(71) Applicant: International Automotive Components Group North America, Inc., Dearborn, MI 48126 (US)
(72) Inventor: Donatti, Joseph T., Howell, MI 48843 (US); Williams, Nelson, Saline, MI 48176 (US)
(74) Representative: Liesegang, Eva

(57) **Abstract**

The invention relates to an interior panel component and the method for making the component. The interior panel component for use with a vehicle includes a skin layer, and a resilient layer secured to the skin. The resilient layer is made from a polymeric MDI, a pure MDI, and a polyol. The polyol is less than 50 pphr of a soy-based polyol. The resilient layer is secured to a substrate to form the interior panel component.

## Description

### BACKGROUND OF THE INVENTION

### 1. Field of the Invention

The invention relates to an interior panel component for use with a vehicle and method for making the component.

### 2. Background Art

Motor vehicle interiors have interior panel assemblies made of many components. Examples of these types of interior panel components include, but are not necessarily limited to, interior door panels, instrument panels, consoles, and other interior trim parts.

The components employed in these panels typically comprise a relatively hard, rigid substrate, a cover skin or layer, and a soft padding disposed between at least part of the substrate and the skin. The soft padding is typically a resilient material, such as a foam. When foam is used, the component is made by placing the skin/cover layer in the mold in a spaced apart arrangement, and then introducing the foam into the mold. The foam, upon curing, secures the cover skin to the substrate.

Flexible, polyurethane foams have been extensively used in the automotive industry for applications. The production of polyurethane foams is well known in the art. Polyurethane foams are formed when isocyanate (NCO) groups react with hydroxyl (OH) groups. The most common method of polyurethane foam production is via the reaction of polyol and isocyanate which forms the backbone urethane groups.

A polyol commonly used in the polyurethane foam reactions is typically derived from petrochemicals, such as glycerin and ethylene oxide. Petrochemical-based polyols' drawbacks include the long-term economic stability and limited reserves of fossil fuels and oils from which they are derived. Soy-based polyols have been developed as an alternative to petrochemical-based polyols. The soy-based polyols are considered a good alternative to petrochemical-based polyols for the production of polyurethane since the soy-based material can offer cost advantages as well as alleviate the environmental concerns associated with petrochemical-based polyols.

While soy-based polyurethane foams have made inroads into various polyurethane markets, the soy-based polyurethane foam has not gained acceptance in the automotive industry, and in particular in the manufacture of interior panels and components, because the soy-based polyols produce open cell polyurethane foam structures with insufficient load bearing capability and other physical properties needed to meet the requirements for many interior panel assemblies.

Accordingly, it is desirable and there is a need to provide a soy-based polyurethane foam that can meet the stringent specification requirements for use in the automotive industry when making interior panel components.

### SUMMARY OF THE INVENTION

The present invention provides interior panel components according to claims 1 and 11 and a method according to claim 14.

One aspect of the present invention relates to an interior panel component for use with a motor vehicle. In certain embodiments, the component includes a skin, and a resilient layer secured to the skin. The resilient layer is made from a polymeric methylene diphenyl diisocyanate (MDI), a pure MDI, which is substantially 4-4' MDI isomer, and a polyol. The polyol comprises less than 50 parts per hundred parts of resin (pphr) of a soy-based polyol. The resilient layer is secured to a substrate.
In another embodiment, an interior panel component for use with a motor vehicle includes a composite layer adjacent to a substrate. The composite layer has a skin layer and a resilient layer. The resilient layer, which is secured to the skin layer, includes a heterochain polymer foam which, before reaction, includes a soy-based polyol. The foam has a compression load deflection ranging between 11% and 28% when measured using ASTM D3574.
In an embodiment of the invention, the resilient layer further comprises a petrochemical-based polyol having a molecular weight greater than the soy-based polyol.

Preferably, the petrochemical-based polyol has a number-averaged molecular weight greater than 2,000.
Preferably, a ratio by weight of polymeric MDI to pure MDI ranges between 0.4 and 4.
Preferably, the component has an effective amount of petrochemical-based polyol and the soy-based polyol wherein the mean elongation of the resilient layer is greater than 60% when measured using ASTM D412 DIE-C method.
Preferably, the mean elongation of the resilient layer is in the range of 60% to 85% when measured using ASTM D412 DIE C method.
Preferably, the compression set of the component, as received, is less than 25% when measured using ASTM D3574.
Preferably, the component measures a compression force deflection of less than 50% after aging.
Preferably, the resilient layer does not substantially shrink within one hour after molding when measured using ASTM 3 D2126.
Preferably, the skin comprises a thermoplastic polyurethane.
Preferably, the substrate comprises a thermoplastic polyolefin.
Preferably, the resilient layer is secured to the skin and the substrate when the resilient layer is foamed-in-place.
Preferably, the resilient layer has a thickness in the range of 0.5 to 10 mm.
Preferably, the heterochain polymer foam comprises polyurethane foam.
Preferably, the composite layer has a compression set after humidity aging of less than 50% when tested and humidity aged using ASTM D3574.

In another embodiment, the method for making an interior panel component for use with a motor vehicle is disclosed. The component is made by applying a skin layer to an upper half of a mold tool and a substrate to the lower half of the mold tool. The upper half and lower half form a cavity. A polymeric MDI, a pure MDI, a soy-based polyol, and a petrochemical-based polyol are dispensed into the cavity to form a foam. The foam is cured in the cavity. The mold halves are opened to release the interior panel component.
In an embodiment of the method of this invention, the foam layer has a density in the range of 74 to 84.4 kg/cm³.
Preferably, the resilient layer has thickness in the range of 0.5 to 10 mm.
Preferably, the interior panel component comprises at least one of a dashboard component, an instrument panel component, or 3 a console component.

According to the present invention, all of the embodiments cited above can be implemented individually or in any combination thereof.

### BRIEF DESCRIPTION OF THE DRAWINGS

The invention will now be described in greater detail in the following way of example only and with reference to the attached drawings, in which:
FIGURE 1 is a perspective view of an interior component comprising a substrate, a resilient layer, and a skin manufactured in accordance with the present invention;
FIGURE 2 is a schematic cross-sectional view along section 2-2 of Figure 1 illustrating the manufactured interior panel component according to at least one embodiment of the present invention;
FIGURE 3 is a schematic view of a process for making the interior panel component according to at least one embodiment of the present invention; and
FIGURE 4 is a schematic view of a foam-in-place process for making the interior panel component according to at least one embodiment of the present invention.

### DETAILED DESCRIPTION OF THE PREFERRED EMBODIMENT(S)

As required, detailed embodiments of the present invention are disclosed herein. However, it is understood that the disclosed embodiments are merely exemplary of the invention that may be embodied in various and alternative forms. The figures are not necessarily to scale, some features may be exaggerated or minimized to show details of particular components. Therefore, specific details disclosed herein are not to be interpreted as limiting, merely as a representative basis for teaching one skilled in the art to variously employ the present invention.

Except where expressly indicated, all numerical quantities in the description and claims, indicated amounts of material or conditions of reaction and/or use are to be understood as modified by the word "about" in describing the broadest scope of the present invention. Practice within the numerical limits stated should be desired and independently embodied. The description of the group or class of materials as suitable for the purpose in connection with the present invention implies that the mixtures of any two or more of the members of the group or classes are suitable. The description of constituents in chemical terms refers to the constituents at the time of addition to any combination specified in the description and does not necessarily preclude chemical interaction among constituents of the mixture once mixed. The first definition of an acronym or other abbreviation applies to all subsequent uses herein of the same abbreviation and applies *mutatis mutandis* to normal grammatical variations of the initially defined abbreviation. Unless expressly stated to the contrary, measurement of a property is determined by the same techniques previously or later referenced for the same property. Also, unless expressly stated to the contrary, percentage, "parts of," and ratio values are by weight, and the term "polymer" includes "oligomer," "co-polymer," "terpolymer," and the like.

It is also to be understood that the invention is not limited to specific embodiments and methods described below, as specific composite components and/or conditions to make, of course, vary. Furthermore, the terminology used herein is used only for the purpose of describing particular embodiments of the present invention and is not intended to be limiting in any way.

It must also be noted that, as used in the specification and the pending claims, the singular form "a," "an," and "the," comprise plural reference unless the context clearly indicates otherwise. For example, the reference to a component in the singular is intended to comprise a plurality of components.

Throughout this application, where publications are referenced, the disclosure of these publications in their entirety are hereby incorporated by reference into this application to more fully describe the state-of-art to which the invention pertains.

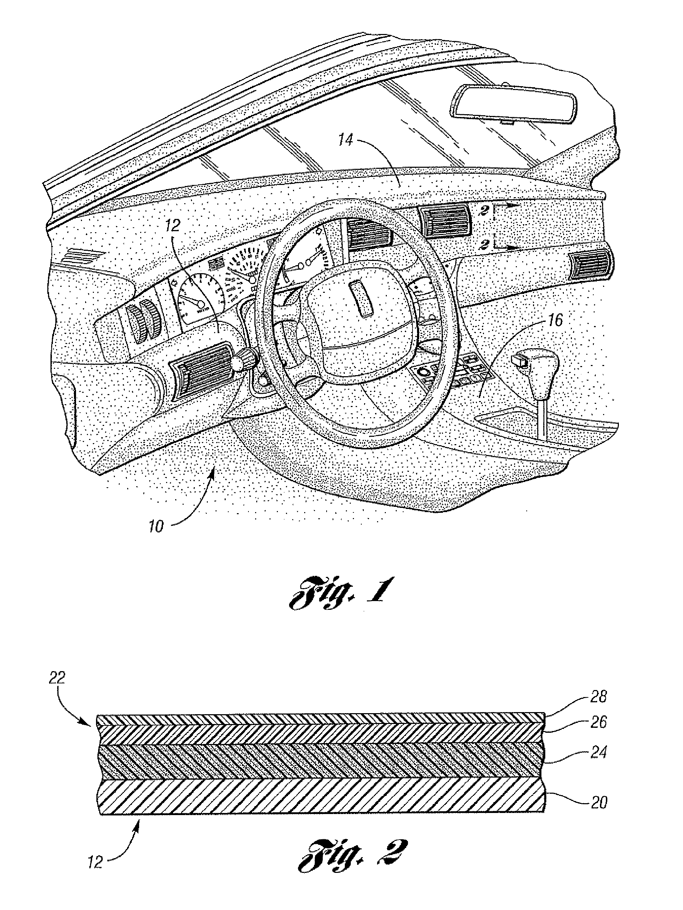

Referring to the figures, and to Figure 1 in particular, an exemplary interior panel assembly 10 for use with a vehicle is shown according to the principles of the present invention. In this embodiment, the panel assembly 10 is illustrated as an instrument panel component 12, a dashboard component 14, and a console component 16. The instrument panel 12, dashboard 14, and console 16 contribute to the aesthetic appearance of the automotive interior and provide comfort and convenience to a vehicle occupant. While the interior panel assembly 10 is illustrated and described herein in an exemplary embodiment and comprises the instrument panel 12, dashboard 14, and console 16, it will be appreciated that the interior panel assembly 10 of the present may alternatively comprise a door trim panel, an armrest, a door handle, or any other interior panel component without departing from the spirit and scope of the present invention.

Referring now to Figure 2, a cross-sectional view of a typical instrument panel component 12 is illustrated along a cross-sectional line 2-2 in Figure 1 . The instrument panel 12 comprises a substrate 20 and, a composite 22 secured to the substrate 20. The instrument panel 12 has a resilient layer 24 such as a foam, that is disposed between at least a portion of substrate 20 and portions of a skin 26.

The substrate 20 and the composite 22, including the resilient layer 24 and the skin 26, can be made of any suitable material known to those of ordinary skill in the art. Suitable examples of materials for making the substrate 20 include, but are not necessarily limited to, polypropylene, polyethylene, acrylonitrile-butadiene-styrene (ABS), thermoplastic elastomer (TPE), polycarbonate (PC), PCIABS blend, styrene maleic anhydride (SMA), and thermoplastic olefin (TPO). The substrate 20 can be made by a suitable process known to those of ordinary skill in the art, such as injection molding or compression molding.

The skin 26 and/or the resilient layer 24 can be made of any suitable material and by a suitable process known to those of ordinary skill in the art. Examples of materials that can be used to form the skin 26 and/or the resilient layer 24 include, but are not limited necessarily to a condensation polymer, a heterochain polymer, TPO, polyimide, polyvinyl chloride (PVC), urethane, polyurethane, thermoplastic polyurethane, and TPE. The skin 26 may be formed by spraying, injection molding, casting, vacuum forming, or other methods known to those of ordinary skill in the art. The resilient layer is formed from any suitable material that is known to those of ordinary skill in the art, such as foam made from a foamable material including condensation polymerization reaction formed heterochain polymers, such as polyurethane foam. An optional coating 28 may be applied to skin 26.

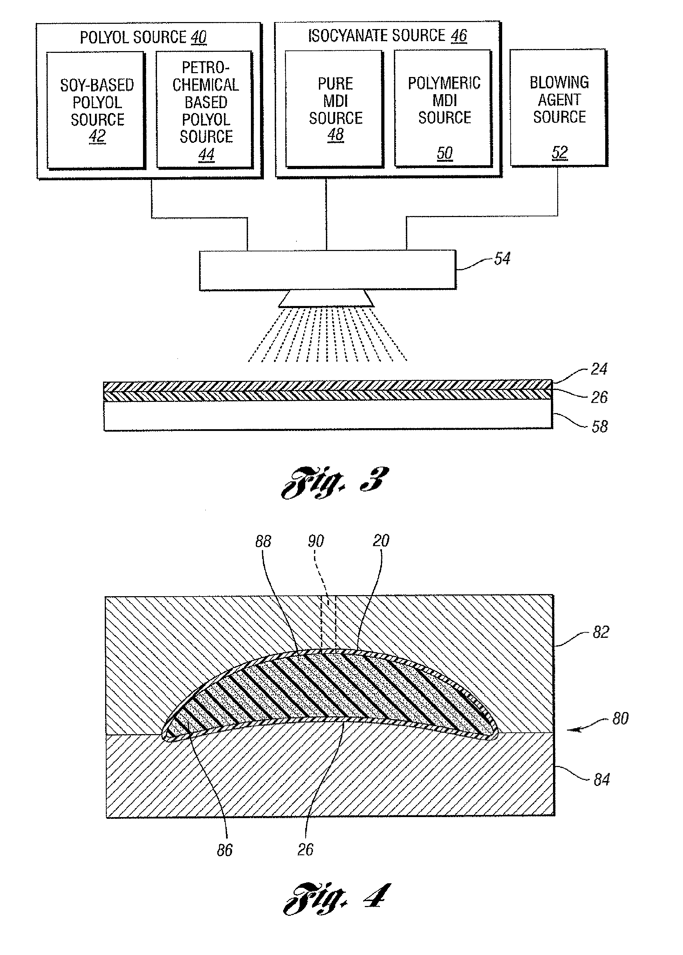

The interior panel assembly 10 is formed by a suitable process, such as a foam-in-place or a spray application process. Any suitable foam-in-place process for use with condensation polymerization reaction derived heterochain polymers may can be used. A particularly advantageous foam-in-place process includes making a resilient polyurethane using a process as illustrated schematically in Figure 3. A polyol source 40 is supplied by a soy-based polyol source 42 and a petrochemicalbased polyol source 44. It is understood that there may be more than one of each of the soy-based polyol source 42 and the petrochemical-based polyol source 44 for formulating chemically or physically distinct polyol materials in those respective categories. An isocyanate source 46 includes a pure MDI source 48 and a polymeric MDI source 50. The ratio by weight of polymeric MDI to pure MDI ranges between 0.4 and 4, more preferably 0.5 and 2, and even more preferably 0.75 to 1.5. An optional blowing agent source 52 and the polyol source 40 and isocyanate source 46 supply a dispenser 54 from which the skin 26 (Figure 2), such as a thermoplastic skin layer, may be applied to a mold 58. The dispenser may also apply the resilient layer 24 (Figure 2) such as a foamed polyurethane layer, which is applied to a portion of skin 26. It is understood that additional optional layers and/or additives, such as an ultraviolet light protective layer, a colorant or an aesthetic layer may be applied as needed to either the skin 26 or the resilient layer 24. The optional layers may be applied to the mold 58 in processing steps that precede and/or occur following the application of the skin 26, such as in-mold coating without violating the spirit or scope of this invention. The molding may occur using cold-cured foam or processing above room-temperature-cured foam in a heated mold.

Shrinkage of the foam for the interior panel component needs to be minimized. When the foam shrinks, the skin 26 may exhibit unacceptable sink marks or other non-level surfaces. Slight shrinkage of less than a 2% decrease in dimension in any direction within an hour after molding as measured using ASTM D1622 test method is advantageous. Even more advantageous is having very little shrinkage of a less than 1% decrease in dimension. No shrinkage is most desirable.

Long-term shrinkage after aging under specif environmental conditions of ASTM D2126 for temperature extremes and humidity can also be measured using AST D1622. In interior panel components, the dimensional shrinkage should be less than 5%, more preferably less than 2%, and even more preferably less than 1%.

Shrinkage may be controlled, in part, by stoichiometric ratio of isocyanate functional groups to polyol functional groups. Typically, an index is reported as 100 times the ratio of isocyanate to polyol functional groups. In forming foam for interior panel components, having the index in the range of 85-115 is advantageous and 95-110 is more advantageous.

The interior panel assembly (Figure 1) is formed in certain embodiments by a foam-in-place process, as schematically illustrated in Figure 4. A molding tool 80 includes an upper mold half 82 and a lower mold half 84. At least one of the mold halves 82 and 84 is capable of axial movement relative to the other mold half. This allows the insertion of the substrate 20 and the skin 26 into the molding tool 80. In a typical process, the skin 26 is placed upon the lower mold half 84, while the substrate 20 is placed in the molding tool 80, often on the upper mold half 82, and spaced apart from the skin 16. The mold halves 82 and 84 are spaced apart prior to molding, the substrate 20 and the skin 26 are typically placed on their respective halves 82 and 84 by clips, hooks, vacuum techniques, or by other means known to those of ordinary skill in the art. After substrate 20 and skin 26 are in place, the mold halves 82 and 84 are closed relative to each other.

The molding tool 80 is positioned to allow a dispenser 54 (Figure 3) to dispense a foaming material 86 into a cavity 88 defined by the area disposed between substrate 20 and skin 26. In certain embodiments the substrate 20 may be provided with an opening 90 to allow dispensing of the foaming material 86 into the cavity 88 when the mold halves 82 and 84 are adjacent and abutting each other, i.e., when the molding tool 80 is closed.

In at least one embodiment, the substrate 20 has a general thickness between 0.5 and 5 mm. In another embodiment, 1.0 to 3.5 mm and yet another embodiment 2 to 3 mm.

The resilient layer 24 (Figure 1) generally contours to the substrate 20. The resilient layer 24 helps to provide a soft feel to the interior panel assembly 10. In at least one embodiment, the density of the resilient layer 24 is in the range of 4.6 lbs/ft³ (74 kg/m³) to 7 lbs/ft³ (84.4 kg/m³). In other embodiments, the density of the resilient layer 24 can range from 75 kg/m³ to 81 kg/m³.

The resilient layer 24 further has a compression load deflection ranging between 11 % and 28% when measured using ASTM D3574. It is understood that ranges for physical properties in Tables 1-12 may be individually and independently selected or calculated from the data of Tables 1-12.

The skin 26 may be bonded in situ to resilient layer 24. In making interior panel components, the adhesion between layers of material is very desirable to maintain a durable and aesthetic panel. The adhesion between skin 26 and resilient layer 24 fails desirably if the foam fails cohesively, i.e., tearing the foam, not the interface between the resilient layer 24 and the skin 26. The method for testing the adhesion is ASTM D 1623 when using a tensile tester such as an Instron. Optionally, the resilient layer 24 adhesion to the skin 26 can be tested by hand pulling apart the two portions.

Moreover, the skin 26 is configured to provide a covering over and generally contouring to the resilient layer 24. In at least one embodiment, the skin 26 is formed by spraying a powdered polymeric material. The polymeric material may, but is not limited to, be a PVC, thermoplastic polyurethane (TPU), TPO, TPE or any combination thereof. The skin 26 may have any suitable thickness and density. For example, the skin 26 may have a thickness in the range of 0.4 to 2 mm and a density in the range of 85 to 120 kg/m³. In at least one embodiment, the skin 26 has a thickness in the range of 0.5 to 1.2 mm and a density in the range of 95 to 110 kg/m. The resilient layer 24 may have a thickness in the range of 0.5 mn - 10 mm, more advantageously 0.75 - 5 mm, and even more advantageously 1 - 3 mm. The skin 26 may also be configured to provide a sufficiently durable and attractive surface such that an exterior coating is not needed.

In another embodiment, the vehicle's interior panel assembly 10 may be manufactured by spraying an optional mold release agent followed by the skin 26 onto the molding tool 80 using a suitable spray device, such as a robotic high volume, low pressure (HVLP) sprayer having a pressure in the range of 1 to 40 psi (6.9 MPa to 275 MPa). The molding tool 80 is in communication with temperature controls to enable the tool to be selectively heated and/or cooled to any suitable desired temperature. Any suitable temperature control system can be used to heat the mold surface.

The molding tool 80 can be made of any suitable material. In at least one embodiment, the molding tool 80 has a conductive exterior surface layer to help responsiveness of the molding tool 80 to temperature control. A suitable example of the material that is conductive includes, but is not necessarily limited to, copper.

While soy-based polyols have been described in this application, it should be understood that any suitable bio-based oil may be used in the practice of the present invention, particularly vegetable oil, through which air has been passed to remove impurities, to functionalize the oil with hydroxyl groups, and to thicken the oil. In addition to soy-oil, examples of suitable bio-based oils that can be converted to polyol for use in the present invention after being blown include: vegetable or seed oils such as grape seed oil, cannola oil, peanut oil, cottonseed, sunflower oil, olive oil, rape seed oil, coconut oil, palm oil, linseed oil, and/or castor oil. Oils derived from animal or fish fats may also be used.

An example of a soy-based polyol that has particular advantages is NOP-19A commercially available from Dow Chemical (Midland, MI). In at least one embodiment, a blend of soy-based polyol and petrochemical-based polyol can be used as the isocyanate-reactive component in the condensation reaction. It is understood that other vegetable and animal fat oils that have been made into polyol may also be used with a mixture of soy-based polyol and petrochemical-based polyol. In these embodiments the soy-based polyol may comprise less than 50 pphr, and more advantageously 10-40 pphr, and most preferably 16-30 pphr. A petrochemical-based polyol in some embodiments may range from more than 50 pphr, between 60-90 pphr, or more advantageously 70-84 pphr.

The molecular weight of the soy-based polyol is generally less than that of the petrochemical polyol. A typical number-averaged molecular weight of the soy-based polyol may range from less than 2000, more advantageously 300-1900, and even more advantageously 500-1000. The molecular weight may be generally monodisperse but it is understood that it could be a polydisperse polymer. The petrochemical polyol may have a number-averaged molecular weight greater than 500, more advantageously greater than 2000, and even more advantageously over 5000.

The isocyanate may include polymeric MDI that may be a polymethylene, polyphenyl isocyanate that contains MDI, and includes a mixture of 2, 4' - and 4, 4' - MDI isomers. Different grades of polymeric MDI may have different ratios of these two isomers. In addition, in polymeric MDI there are three-functional, four-functional, and higher oligomers, each of which has multiples of isomers. Pure MDI includes primarily 4, 4' - MDI isomer, but commercial products normally contain 1 to 2% by weight of the 2, 4' isomer, but may include 2-4' isomer in the range of less than 20% by weight, less than 10% by weight, or less than 5% by weight. A non-limiting example of the pure MDI is HB6562 supplied by Dow Chemical. A non-limiting example of polymeric MDI is PAPI95 supplied by Dow Chemical. The typical functionality for polymeric MDI ranges between 2 and 3, more preferably 2.2 to 2.8, and most preferably 2.3 to 2.5. The viscosity ranges from 60 to 80 centipoise at 25°C when tested with a Brookfield viscometer. An acidity, as percent HCl, ranges from 0.010 to 0.20 when determined using Dow Chemical method 109-00761.

Other additives may be added to either the isocyanate source 46 or the polyol source 40. Typical additives may optionally include catalysts, surfactants, and chain-extenders. An example of catalyst is a delayed reaction catalyst such as triethylamine-N-oxide (TEAO). A typical surfactant may include B4113 supplied by Taegostab, which is a product line of the Goldschmidt Chemical Corporation, Division of Degussa (Hopewell, VA), or Dabco, 33-LV, which is a mixture of 33% triethylaminediamine and 67% dipropylene glycol, available from Air Products. An example of an additive for scavaging acid in the foam is a N, N-dimethyl ethylamine (DMEA) which is provided by Huntsman International.

### Example 1

A series of polyurethane foams using 0-50 pphr of a soy-based polyol are formulated with polymeric MDI. Formulations are given in Tables 1-5. The polyols are a blend of three polyols: soy-based polyol NOP-19A and petrochemical-based polyols 4701, an ethylene oxide capped tri-functional oxy propylene polyether from Dow Chemical (Midland, MI), and 493 5, a tri-functional styrene acrylonitrile copolymer polyol having about 35% solids and an equivalent weight of 2435, available from Dow Chemical (Midland, MI) as their Voranol™ series. Polyol 4935 has a molecular weight range about 4000, and is greater than the molecular weight range of 4701 and NOP-19A. The molecular weight of polyol 4701 exceeds that of polyol NOP-19A.

Physical properties for the foams of Example 1 are given in Table 6.

Foams made with polymeric MDI and with between 5% and 20% of the foam's weight (10-40 pphr) of soy-based polyol have advantageous physical properties. Using the same formulation components at 25% of the foam's weight (50 pphr) of soy-based polyol, the elongation of the resulting foam, is on the average, less than desired.

### Example 2

A foam with the same components as Example 1 is prepared using 43 pphr of the soy-based polyol as well as 43 pphr of the higher molecular weight petrochemical-based polyol 4935 and 14 pphr of petrochemical-based polyol 4701. The formulation has 25% of the foam weight of soy-based polyol and 25% of the foam weight of petrochemical-based polyol 4935 in the foam. The formulation is available in Table 7. The results for this formulation show that in order to use 25% or more soy-based polyol (43 or more pphr) and achieve advantageous properties, a petrochemical-based polyol, such as polyol 4935 having relatively high number averaged molecular weight is used. The result is an increase in the elongation to desirable levels when measured using ASTM D412-DIE-C.

### Example 3

Forming a composite layer, such as composite 22 of Figure 2, having a thermoplastic polyurethane skin and a resilient layer of polyurethane foam having 10% by weight of the foam (20 pphr) foam soy-based polyol is tested for physical properties. The formulation is provided in Table 8. The composite layer's physical properties are given in Table 9. Using only polymeric MDI, the compression set, as received, does not have sufficiently advantageous properties.

### Example 4

A formulation having 20% by weight of the foam from soy-based polyol (40 pphr) and the same quantity of high molecular weight petrochemical-based 4935 polyol as in Example 3, polymeric MDI at 60 pphr, and pure MDI at 40 pphr is formed into a composite layer as in Example 3. Using the blend of polymeric MDI and pure MDI results in a remarkably improved initial compression set for the composite layer. The formulation is given in Table 10 and the results are shown in Table 11.

**Table 1**

| Formula A-1 | Material | Parts (pphr) | Eq. Wt. | Total Eq. |
|---|---|---|---|---|
| | | | | |
| Base | NOP-19A | 0 | 904.80 | 0.0000 |
| | 4701 | 0 | 1650.00 | 0.0000 |
| | 4935 | 35 | 2390.00 | 0.0146 |
| | TEAO | 2 | 49.70 | 0.0404 |
| | V-800 | 2 | 70.10 | 0.0285 |
| | B-4113 | 0.35 | 1750.00 | 0.0002 |
| | 33-LV | 0.4 | 102.50 | 0.0039 |
| | ET | 0.05 | 2337.00 | 0.0002 |
| | DMEA | 0.3 | 87.90 | 0.0034 |
| | H₂O | 2.3 | 9.00 | 0.2555 |
| | SUM | 42.4 | | 0.3467 |
| | | | | |
| | PAPI 95 | 45.4582 | 131.1 | 0.3467 |
| | Mix Ratio | 0.933 | | |

**Table 2**

| Formula A-1 | Material | Parts (pphr) | Eq. Wt. | Total Eq. |
|---|---|---|---|---|
| A-1-1 | | | | |
| | NOP-19A | 10 | 904.80 | 0.0111 |
| 5.0% Soy | 4701 | 55 | 1650.00 | 0.0333 |
| | 4935 | 35 | 2390.00 | 0.0146 |
| | TEAO | 2 | 49.70 | 0.0404 |
| | V-800 | 2 | 70.10 | 0.0285 |
| | B-4113 | 0.35 | 1750.00 | 0.0002 |
| | 33-LV | 0.4 | 102.50 | 0.0039 |
| | ET | 0.05 | 2337.00 | 0.0002 |
| | DMEA | 0.3 | 87.90 | 0.0034 |
| | H₂O | 2.3 | 9.00 | 0.2555 |
| | SUM | 107.4 | | 0.3911 |
| | | | | |
| | PAPI 95 | 51.273 | 131.1 | 0.3911 |
| | Mix Ratio | 2.095 | | |
| | Time to Top of Cup | 31 - 32 sec. | | |
| | Gel Time | 41 - 45 sec. | | |
| | End of Rise | 56 - 68 sec | | |
| | Density | 4.90-5.03 lbs/ft³ | | |
| | Foam looks good and no shrinkage | | | |

**Table 3**

| Formula A-1 | Material | Parts (pphr) | Eq. Wt. | Total Eq. |
|---|---|---|---|---|
| A-1-2 | | | | |
| | NOP-19A | 20 | 904.80 | 0.0221 |
| 10% Soy | 4701 | 45 | 1650.00 | 0.0273 |
| | 4935 | 35 | 2390.00 | 0.0146 |
| | TEAO | 2 | 49.70 | 0.0404 |
| | V-800 | 2 | 70.10 | 0.0285 |
| | B-4113 | 4.35 | 1750.00 | 0.0002 |
| | 33-lav | 0.4 | 102.50 | 0.0039 |
| | ET | 0.05 | 2337.00 | 0.0002 |
| | DMEA | 0.3 | 87.90 | 0.0034 |
| | H₂O | 2.3 | 9.00 | 0.2555 |
| | SUM | 107.4 | | 0.3961 |
| | | | | |
| | PAPI 95 | 51.932 | 131.1 | 0.3961 |
| | Mix Ratio | 2.068 | | |
| | Time to Top of Cup | 31 | | |
| | Gel Time | 40 - 41 | | |
| | End of Rise | 54 - 58 | | |
| | Density | 4.69-4.87 lbs/ft³ | | |
| | No foam shrinkage noted but hard at 100 Index, much softer at 90 Index | | | |

**Table 4**

| Formula A-1 | Material | Parts (pphr) | Eq. Wt. | Total Eq. |
|---|---|---|---|---|
| A-1-3 | | | | |
| | NOP-19A | 40 | 904.80 | 0.0442 |
| 20% Soy | 4701 | 25 | 1650.00 | 0.0152 |
| 17.5% 4935 | 4935 | 35 | 2390.00 | 0.0146 |
| | TEAO | 2 | 49.70 | 0.0404 |
| | V-800 | 2 | 70.10 | 0.0285 |
| | B-4113 | 0.3 | 1750.00 | 0.0002 |
| | 33-LV | 0.4 | 102.50 | 0.0039 |
| | ET | 0.05 | 2337.00 | 0.0002 |
| | DMEA | 0.3 | 87.90 | 0.0034 |
| | H₂O | 2.3 | 9.00 | 0.2555 |
| | SUM | 107.4 | | 0.4061 |
| | | | | |
| | PAPI 95 | 53.240 | 131.1 | 0.4061 |
| | Mix Ratio | 2.017 | | |
| | Time to Top of Cup | 31-32 | | |
| | Gel Time | 40-41 | | |
| | End-of-Rise | 55-56 | | |
| | Density | 4.95-4.96 lbs/ft³ | | |
| | Very little foam shrinkage, sensitive to shear collapse, 100 Index | | | |

**Table 5**

| Formula A-1 | Material | Parts (pphr) | Eq. Wt. | Total Eq. |
|---|---|---|---|---|
| A-1-4 | | | | |
| | NOP-19A | 50 | 904.80 | 0.0553 |
| 25% Soy | 4701 | 15 | 1650.00 | 0.0091 |
| 17.5% 4935 | 4935 | 35 | 2390.00 | 0.0146 |
| | TEAO | 2 | 49.70 | 0.0404 |
| | V-800 | 2 | 70.10 | 0.0285 |
| | B-4113 | 0.35 | 1750.00 | 0.0002 |
| | 33-LV | 0.4 | 102.50 | 0.0039 |
| | ET | 0.05 | 2337.00 | 0.0002 |
| | DMEA | 0.3 | 87.90 | 0.0034 |
| | H₂O | 2.3 | 9.00 | 0.2555 |
| | SUM | 107.4 | | 0.4111 |
| | | | | |
| | PAPI 95 | 53.895 | 131.1 | 0.4111 |
| | Mix Ratio | 1.993 | | |
| | Time to Top of Cup | 30 - 31 sec. | | |
| | Gel Time | 36 - 38 sec. | | |
| | End-of-Rise | 53 - 54 sec. | | |
| | Density | 4.90 - 4.95 lbs/ft³ | | |
| | Foam softer | | | |
| | Slight foam shrinkage, 100 Index | | | |

**Table 6**

| 5% (10 pphr) NOP Soy Polyol A1-1 | | | | | |
|---|---|---|---|---|---|
| | Criterion | Mean | Range | Standard Deviation | Pass/Fail |
| Tensile As Received ASTM D3574 | 11.9 lbf/in² Min. | 37.1 | 33.9 - 40.6 | | P |
| Elongation ASTM D412-DIE-C | 60% Min. | 64 | 60 - 70 | | P |
| Tear ASTM D3574 | 0.74 lbf/in Min. | 1.69 | 1.53 - 1.89 | | P |
| Compression Sets As Recvd ASTM D3574 | 40% Max. | 20.4 | 19.9 - 21.1 | | P |
| Compression Sets Humid Aged ASTM D3574 | 50% Max. | 18.0 | 16.7 - 19.4 | | P |
| Flammability (Foam Only) ASTM D1692 | 4.0 in./min. Max. | 1.49 in./min. | 1.34 - 1.63 | | P |
| Compression Load Deflection 0.5 x 2 in. at 25% Compression ASTM D3574 | | 18.44% | 11.46 - 24.52 | 5.12 | |

| 10% (20 pphr) NOP Soy Polyol A1-2 | | | | | |
|---|---|---|---|---|---|
| Tensile As Received ASTM D3574 | 11.9 lbf/in² Min. | 35.7 | 32.8 - 38.6 | | P |
| Elongation ASTM D412-DIE-C | 60% Min. | 62 | 55 - 70 | | P |
| Tear ASTM D3574 | 0.74 Ibf/in Min. | 1.81 | 1.59 - 2.20 | | P |
| Compression Sets As Recvd ASTM D3574 | 40% Max. | 24.6 | 21.4 - 26.6 | | P |
| Compression Sets Humid Aged ASTM D3574 | 50% Max. | 22.2 | 20.1 - 24.3 | | P |
| Flammability (Foam Only) ASTM D1692 | 4.0 in./min. Max. | 1.18 | 1.14 - 1.25 | | P |
| Compression Load Deflection 0.5 x 2 in. at 25% Compression ASTM D3574 | | 21.27% | 14.63 - 26.10 | 5.25 | |

| 20% (40 pphr) NOP Soy Polyol Al-3 | | | | | |
|---|---|---|---|---|---|
| Tensile As Received ASTM D3574 | 11.9 lbf/in² Min. | 36.7 | 33.4 - 42.0 | | P |
| Elongation ASTM D412-DIE-C | 60% Min. | 60 | 50 - 70 | | P |
| Tear ASTM D3574 | 0.74 lbf/in Min. | 1.90 | 1.8 -1.96 | | P |
| Compression Sets As Recvd ASTM D3574 | 40% Max. | 34.0 | 32.2 - 36.1 | | P |
| Compression Sets Humid Aged ASTM D3574 | 50% Max. | 28.0 | 25.8 - 29.3 | | P |
| Flammability (Foam Only) ASTM D1692 | 4.0 in./min. Max. | 0.86 | 0.84 - 0.89 | | P |
| Compression Load Deflection 0.5 x 2 in. at 25% Compression ASTM D3574 | | 23.48% | 18.05-27.93 | 4.07 | |

| 25% (50 pphr) NOP Soy Polyol A1-4 | | | | | |
|---|---|---|---|---|---|
| Tensile As Received ASTM D3574 | 11.9 lbf/in² Min. | 42.0 | 39.4-48.9 | | P |
| Elongation ASTM D412-DIE-C | 60% Min. | 53 | 50 - 60 | | F |
| Tear ASTM D3574 | 0.74 lbf/in Min. | 1.81 | 1.71 - 1.89 | | P |
| Compression Sets As Recvd ASTM D3574 | 40% Max. | 32.7 | 32.0 - 33.6 | | P |
| Compression Sets Humid Aged ASTM D3574 | 50% Max. | 34.3 | 32.8 - 35.5 | | P |
| Flammability (Foam Only) ASTMD1692 | 4.0 in./min. Max. | 0.80 | 0.77 - 0.82 | | P |
| Compression Load Deflection 0.5 x 2 in. at 25% Compression ASTM D3574 | | 22.03% | 18.17 - 28.42 | 4.23 | |

**Table 7**

| Formula A-1 | Material | Parts | Eq. Wt. | Total Eq. |
|---|---|---|---|---|
| A-1-5 | | | | |
| | NOP-19A | 43 | 904.80 | 0.0553 |
| 25% Soy | 4701 | 15 | 1650.00 | 0.4091 |
| 25% 4935 | 4935 | 50 | 2390.00 | 0.0209 |
| | TEAO | 2 | 49.70 | 0.0404 |
| | V-800 | 2 | 70.10 | 0.0285 |
| | B-4113 | 0.35 | 1750.00 | 0.0002 |
| | 33-LV | 0.4 | 102.50 | 0.0039 |
| | ET | 0.05 | 2337.00 | 0.0002 |
| | DMEA | 0.3 | 87.90 | 0.0034 |
| | H₂O | 2.3 | 9.00 | 0.2555 |
| | SUM | 122.4 | | 0.4174 |
| | | | | |
| | PAPI 95 | 54.718 | 131.1 | 0.4174 |
| | Mix Ratio | 2.237 | | |
| | Time to Top of Cup | 43 - 44 sec. | | |
| | Gel Time | 50 - 51 sec. | | |
| | End-of-Rise | 58 - 60 sec. | | |
| | Density | 5.27 lbs/ft³ | 84.4 kg/m³ | |
| | Good foam no shrinkage at 25% 4935 | | | |
| | Foam is softer, but okay, 100 Index | | | |

**Table 8**

| B-1 Experimental | Material | Parts | Eq. Wt. | Total Eq. |
|---|---|---|---|---|
| BASE | | | | |
| Foam Formulation | NOP-19A | 20 | 904.80 | 0.0221 |
| B-1-1 | 4701 | 50 | 1650.00 | 0.0303 |
| | 4935 | 30 | 2390.00 | 0.0126 |
| 10 % Soy | TEAO | 1.5 | 49.70 | 0.0302 |
| | V-800 | 1 | 70.10 | 0.0143 |
| | V-4053 | 5 | 1800.00 | 0.0028 |
| | Lexorex | 3.5 | 880.00 | 0.0040 |
| | B-4113 | 0.25 | 1750.00 | 0.0001 |
| | 33-LV | 0.6 | 102.50 | 0.0059 |
| | ET | 0.07 | 2337.00 | 0.0000 |
| | DMEA | 0.43 | 87.90 | 0.0049 |
| | DR-2205 | 0.5 | 1650.00 | 0.0003 |
| | H₂O | 2.3 | 9.00 | 0.2556 |
| | SUM | 115.15 | | 0.3829 |
| | | | | |
| | PAPI 95 | 50.203 | 131.1 | 0.3829 |
| | Mix Ratio | 2.29 | | |
| | Time to Top of Cup | 30 - 32 sec. | | |
| | End-of-Rise | 57 - 58 sec. | | |
| | Gel Time | 36 - 38 sec. | | |
| | Density | 4.56-4,73 lbs/in³ | | |

**Table 9**

| 10 % Soy Polyol B-1 with TPU Skin | | | | | |
|---|---|---|---|---|---|
| | Criterion | Mean | Range | Std. Deviation | Pass/Fail |
| Tensile As Recvd ASTM D3574 | 11.9 lbf/in² Min. | 34.2 | 32.1-36.6 | | P |
| Elongation ASTM D412 DIE-C | 60 % Min. | 69 | 65-70 | | P |
| Tear ASTM D3574 | 0.74 lbf/in Min. | 1.50 | 1.41-1.58 | | P |
| Compression Set Recvd ASTM D3574 | 40 % Max | 33.9 | 32.8-34.8 | | P |
| Compression Set Humid Aged ASTM D3574 | 50 % Max | 17.4 | 16.7-18.8 | | P |
| Compression Load Deflection 0.5x2 in 25% Compression | | 17.8 | 14.5-22.0 | 2.5 | P |
| Adhesion | Cohesive Failure | 1 lbf/in | 0.42-1.9 | 0.51 | P |
| Compression Force Deflection | 50 % Max | 16.5 | | | P |
| Compression Sets as Recvd | 25 % Max | 34.5 | 32.5-35.3 | | F |
| Compression Sets Humid Aged | 50 % Max | 21.1 | 19.4-23.0 | | P |

**Table 10**

| B-2 Experimental | Material | Parts | Eq. Wt. | Total Eq. |
|---|---|---|---|---|
| BASE | | | | |
| Foam Formulation | NOP-19A | 40 | 904.80 | 0.0442 |
| B-2-2 | 4701 | 30 | 1650.00 | 0.0182 |
| | 4935 | 30 | 2390.00 | 0.0126 |
| 20% Soy | TEAO | 1.5 | 49.70 | 0.0302 |
| | V-800 | 0 | 70.10 | 0.0000 |
| 60 PAPI 95 | V-4053 | 4 | 1800.00 | 0.0022 |
| 40 HB6562 | Lexorex | 3.5 | 880.00 | 0.0040 |
| | B-4113 | 0.25 | 1750.00 | 0.0001 |
| | 33-LV | 0.6 | 102.50 | 0.0059 |
| | ET | 0.07 | 2337.00 | 0.0000 |
| | DMEA | 0.43 | 87.90 | 0.0049 |
| | DR-2205 | 0.5 | 1650.00 | 0.0003 |
| | H₂O | 2.3 | 9.00 | 0.2556 |
| | SUM | 113.15 | | 0.3781 |
| | | | | |
| | 60 PAPI 95 | 55.316 | 146.3 | 0.3781 |
| | 40 HB6562 | | | |
| | Mix Ratio | 2.046 | | |
| | Time to Top of Cup | 32-33 | | |
| | Gel Time | 42-43 | | |
| | End-of-Rise | 70 | | |
| | Density | 4.62 lbs/ft³ | | |
| | Shrinkage at 100 index | | | |
| | Slight shrinkage at 108 index, much better | | | |

**Table 11**

| 20 % Soy Polyol B-2 with TPU Skin | | | | | |
|---|---|---|---|---|---|
| | Criterion | Mean | Range | Std. Deviation | Pass/ Fail |
| Tensile As Recvd ASTM D3574 | 11.9 lbf/in² Min. | 30.9 | 29.4-32.8 | | P |
| Elongation ASTM D412 DIE-C | 60 % Min. | 61 | 45-70 | | P |
| Tear ASTM D3574 | 0.74 lbf/in | 1.42 | 1.33-1.53 | | P |
| Compression Sets As Recvd ASTM D3574 | 40%Max | 22.5 | 21.5-23.4 | | P |
| Compression Sets Humid Aged ASTM D3574 | 50 % Max | 21.5 | 21.1-22.0 | | P |
| Flammability (Foam Only) ASTM D1692 | 4.0 in./min. Max. | 2.09 | 1.86-2.09 | | P |
| Compression Load Deflection 0.5 x 2 in. 25 % Compression ASTM D3574 | | 19.0% | 10.97-24.03 | 4.78 | |
| Adhesion | Cohesive Failure | 0.84 lbf/in | 0.42-1.6 | 0.47 | |
| Compression Force Deflection | 50 % Max | 13.3 | | | P |
| Compression Sets As Recvd | 25 % Max | 23.9 | 22.6-24.9 | | P |
| Compression Sets Humid Aged | 50 % Max | 19.4 | 18.5-19.7 | | P |

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. An interior panel component for use with a motor vehicle, the component comprising:
a skin;
a resilient layer secured to the skin, the resilient layer comprising before reaction, a polymeric MDI, a pure MDI consisting essentially of 4-4' MDI isomer, and a polyol, the polyol comprising less than 50 parts per hundred parts of resin (pphr) of a soy-based polyol; and
a substrate.

2. The component of claim 1, the resilient layer further comprising a petrochemical-based polyol having a molecular weight greater than the soy-based polyol.

3. The component of claim 2, wherein the petrochemical-based polyol has a number-averaged molecular weight greater than 2,000.

4. The component of claim 2 or 3, having an effective amount of petrochemical-based polyol and the soy-based polyol wherein the mean elongation of the resilient layer is greater than 60% when measured using ASTM D412 DIE-C method.

5. The component of one of the preceding claims, wherein a ratio by weight of polymeric MDI to pure MDI ranges between 0.4 and 4.

6. An interior panel component for use with a motor vehicle, the component comprising:
a composite layer comprising a skin layer and a resilient layer, wherein the resilient layer is secured to the skin layer, the resilient layer comprising a heterochain polymer foam which, before reaction, comprises a soy-based polyol, the resilient layer having a compression load deflection ranging between 11 and 28% when measured using ASTM D3574; and
a substrate.

7. The component of claim 13, wherein the heterochain polymer foam comprises polyurethane foam.

8. The component of one of the preceding claims, wherein the mean elongation of the resilient layer is in the range of 60% to 85% when measured using ASTM D412 DIE-C method.

9. The component of one of the preceding claims, wherein the compression set of the component, as received, is less than 25% when measured using ASTM D3574.

10. The component of one of the preceding claims, wherein the skin comprises a thermoplastic polyurethane.

11. The component of one of the preceding claims, wherein the substrate comprises a thermoplastic polyolefin.

12. The component of one of the preceding claims, wherein the resilient layer is secured to the skin and the substrate when the resilient layer is foamed-in-place,

13. The component of claim 13, wherein the resilient layer has a thickness in the range of 0.5 to 10 mm.

14. A method for making an interior panel component for use with a motor vehicle, the method comprising:
applying a skin layer to an upper mold half of a mold tool;
applying a substrate to a lower mold half of the mold tool, the upper half and lower half defining a cavity;
closing the mold halves relative to each other;
dispensing foam into the cavity, the foam comprising a polymeric MDI, a pure MDI, a soy-based polyol, and a petrochemical-based polyol;
curing the foam in the cavity; and
opening the mold halves to release the interior panel component.

15. The method of claim 17, wherein the foam layer has a density in the range of 74 to 84.4 kg/cm³.
